# EUROPEAN PATENT APPLICATION

(11) **EP 2 721 978 A1**
(43) Date of publication of application: **23.04.2014**
(21) Application number: 13187949.6
(22) Date of filing: 09.10.2013
(51) Int. Cl.: A47J 39/00

(54) **Food warmer**

(30) Priority: 18.10.2012 IT BS20120147
(71) Applicant: Archetti, Laura, 25030 Erbusco (BS) (IT)
(72) Inventor: Archetti, Laura, 25030 Erbusco (BS) (IT)
(74) Representative: Pes, Matteo

(57) **Abstract**

It is described a food warmer (100) comprising a first portion (10) defining a treatment chamber (15) in which a dish to be heated, or to be maintained at constant temperature, is introduced, and a second portion (20), combined with the first portion (10), in which an air-heating assembly (25) is arranged for the air directed to the treatment chamber (15). The first (10) and the second (20) portions comprise guide means (29) allowing the selective switching between a first closed configuration (A), wherein the first and the second portions are operatively connected one to another, and a second open configuration (B), wherein the first and the second portions are separated one from another to allow operations of maintenance, replacement of pieces or else replacement of one of the two portions with a new portion.

## Description

### Scope of the invention

The present invention claims the priority of the Italian Application n. BS2012A000147 filed in October 18, 2012 and generally concerns a food warmer for heating foods or dishes or else for maintaining these at hot temperature, which is used particularly in restaurants, dining halls, coffee bars or other haunts in generals, or else at home too.

### State of the art

As known, food warmers are used in catering field but also in domestic field for heating previously-cooked dishes or maintaining these at a constant temperature, in order to keep them ready to be tasted even after their cooking.

A common food warmer is mainly composed of a treatment chamber in which dishes are placed; a heating assembly, arranged for heating in a controlled way the air to be fed into the treatment chamber, and an air-recirculating assembly, arranged for circulating the air between the treatment chamber and the heating assembly, are associated with the treatment chamber.

The Applications n°. US 2008/0098907, WO 2006/100412 and the Patent US 5,676,051 describe known technical solutions adapted for implementing food warmers.

Usually, food warmers operate for a great number of hours per day; hence, they are subjected to possible malfunctions or failures commonly regarding the heating assembly and/ or the air-recirculating assembly.

It follows that, in view of a malfunction or a repairing operation, the food warmer has to be certainly excluded from usage for some time or else replaced with an operating food warmer, so that the productive capacity is not compromised, for example of the catering service line. Let us think about a dining hall wherein a sudden malfunction of one or more food warmers could be critical.

It is therefore necessary to carry out maintenance or cleaning operations regularly for minimizing the malfunction probability.

For example, it is convenient to remove food remnants that could build up in the heating assembly or in the recirculating assembly over time, or else to carry out precautionary operations of piece replacement. However, the afore said operations are complicated and laborious as the heating assembly and the recirculating assembly have not an easily accessible shape.

In addition to the possible malfunction aspect, there is the prospect of having to intervene promptly on the food warmer also when the heating assembly reached the maximum number of useful operating hours thereby compromising the efficiency thereof. The structure or arrangement itself of the food warmer makes necessary a complete substitution of the whole food warmer as one, for example comprising the treatment chamber that is in itself free of damageable mechanisms or controls and then would have a lifetime longer with respect to the latter.

Therefore, there is the need of realizing a food warmer to solve the afore mentioned drawbacks, which allows an easy maintenance of the heating assembly and the air-recirculating assembly, and/ or facilitates replacement of parts, but in addition allows to interchange only the elements or parts subjected to malfunctions without having to completely replace the whole food warmer.

### Summary of the invention

It is an object of the present invention to provide a food warmer that solves the afore described drawbacks.

It is another object of the present invention to provide a food warmer that is easy and economic to implement.

These and other objects are obtained by a food warmer according to claim 1.

In particular, the food warmer according to the present invention comprises a first portion defining a treatment chamber in which a dish to be heated, or to be maintained at constant temperature, is introduced, and a second portion provided with an air-heating assembly and/ or an air-recirculating assembly. In particular, the first portion has an open side and the second portion is reversibly connectable to the first portion to close said open side, thereby isolating the treatment chamber from the outer environment, and to operatively combine the air-heating assembly and/ or the air-recirculating assembly to the closed treatment chamber.

Advantageously, the first and the second portions comprise guide means allowing the first and the second portions to selectively switch between a first configuration or a closed configuration, wherein the first and the second portions are operatively connected one to another, and a second configuration or an open configuration, wherein the first and the second portions are separated one from another to allow operations of maintenance, replacement of pieces or else replacement of one of the two portions with a new portion.

In other words, the two main portions of the food warmer, that is the treatment chamber and the portion comprising the heating assembly and/ or the recirculating assembly, can be operatively connected one to another but, concerning the structure they are independent and can be broken down and separated so as to allow carrying out disassembling or maintenance operations easily and quickly for the food warmer on both portions; in case of needs this feature further allows their complete replacement with corresponding spare parts.

Advantageously, the food warmer according to the present invention can be easily disassembled for the replacement or maintenance of its parts. It is sufficient to separate the second portion from the first portion in order to get to the heating assembly and the recirculating assembly, and also to get to the treatment chamber sideways.

Preferably, the first portion is a box-shaped body defined by a plurality of walls and having said open side or face; the box-shaped body comprises an access door for inserting dishes into the treatment chamber.

Preferably, the second portion comprises a vertical wall associated with a base wall. With this L-shaped configuration, the second portion can be partially inserted in the box-shaped body; in particular the base wall is hidden inserted in the box-shaped body and the vertical wall moves in abutment against the box-shaped body, at the respective open face, thereby arranging as a vertical wall of the food warmer and closing the box-shaped body inside which the treatment chamber is isolated. In an embodiment, the vertical wall of the second portion of the food warmer and the base wall are in turn separably coupled.

Preferably, the open face of the box-shaped body defines a perimetrical edge in which a seal is arranged. The vertical wall of the second portion in the closed configuration compresses the seal to obtain a sealed coupling.

Preferably the guide means comprise a coupled of guides, respectively arranged on the base wall of the second portion and inside the box-shaped body that allow the slide of the base wall in the box-shaped body, with the proper alignment.

In a preferred embodiment the treatment chamber, obtained inside the box-shaped body, is defined by a plurality of pierced or grid-shaped walls or else with whatever openings, which allow the air circulation. The so-realized treatment chamber occupies only part of the space inside the box-shaped body. In the remaining inner space a channel for the air circulation is provided, defined by the same walls of the treatment chamber and the walls of the box-shaped body. Preferably, the channel surrounds at least in part the treatment chamber so that to realize a passage aiding the air circulation and change inside the treatment chamber continuously.

The passage channel develops both below the treatment chamber, in a volume of the box-shaped body where the base wall of the second portion of the food warmer is inserted, and sideways and/ or above the treatment chamber in order to convey air through the holes present in the walls of the same treatment chamber. Therefore, the passage channel defines a closed-loop path in which the air is circulating.

In a preferred embodiment the heating assembly comprises one or more heating elements, preferably electrical resistances. The air-recirculating assembly comprises one or more fans whose function is to force the air flow into the afore said passage channel, to create a continuous air motion between the treatment chamber and the electrical resistances.

Preferably, the ventilation means are assembled on the vertical wall of the second portion of the food warmer.

Preferably, the heating means are housed on the base wall of the second portion of the food warmer.

The advantages given by the described configuration are clear. In case of malfunction of a resistance or fan it is sufficient to draw out the second portion of the food warmer, separating it from the first portion, to access directly these elements, which in case could be cleaned or replaced.

Furthermore, the user can acquire a food warmer and several spare parts, which in case of need are used without the necessity of replacing the whole food warmer. It is sufficient to keep several second portions as spare parts, or else single electrical resistances or fans.

### Description of the Drawings

Further characteristics and advantages of the present invention will be more evident from a review of the following specification of a preferred, but not exclusive, embodiment, shown for illustration purposes only and without limitation, with the aid of the attached drawings, in which:
- figure 1 shows a perspective view of the food warmer according to the invention;
- figure 2 shows a section view of the food warmer in an open configuration;
- figure 3 shows a section view of the food warmer in a closed configuration;
- figure 4 shows a perspective view of the second portion in which a heating assembly is arranged.

### Detailed description of the invention

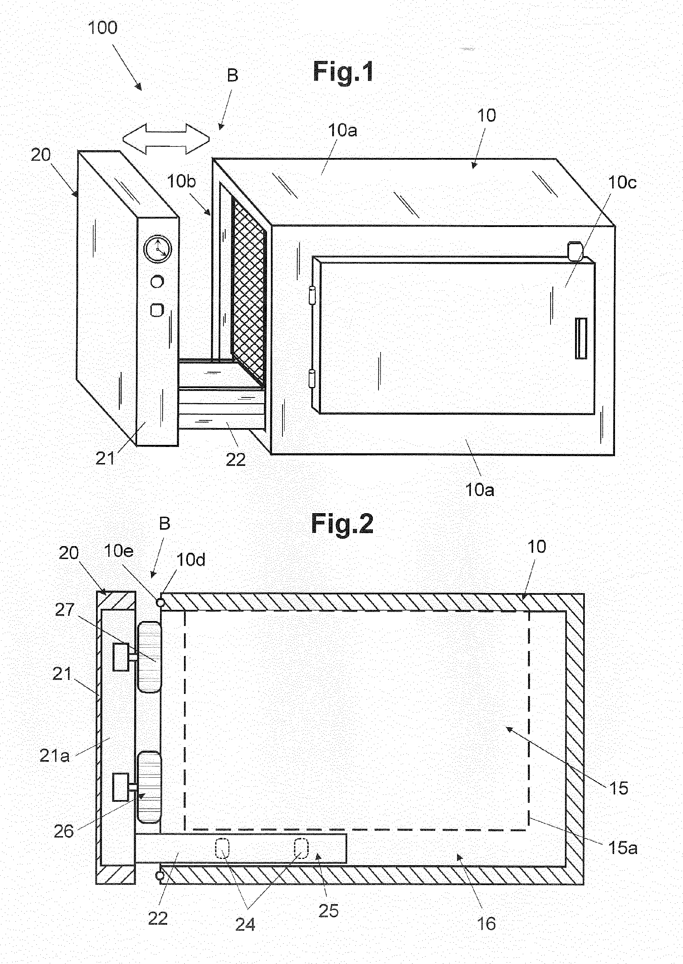

Referring to figure 1 a food warmer **100** is represented, according to the present invention, comprising a first portion **10** in which a treatment chamber **15** is obtained for the insertion of a dish to be heated, or to be maintained at constant temperature, and a second portion **20** associated with the first portion **10,** representing the operative part of the food warmer **100** and comprising an air-heating assembly **25** and/ or and air-recirculating assembly **26** for the treatment chamber **15.** In particular, the first portion **10** has an open side **10b** and the second portion **20** is reversibly connected, and can be easily disassembled, to/from the first portion **10** in order to close the side **10b,** thereby ensuring the tight of the treatment chamber **15** from the outer environment, and further ensuring the heating assembly **25** and the recirculating assembly **26** for providing the proper supply of thermal power and circulation of hot air to the closed treatment chamber.

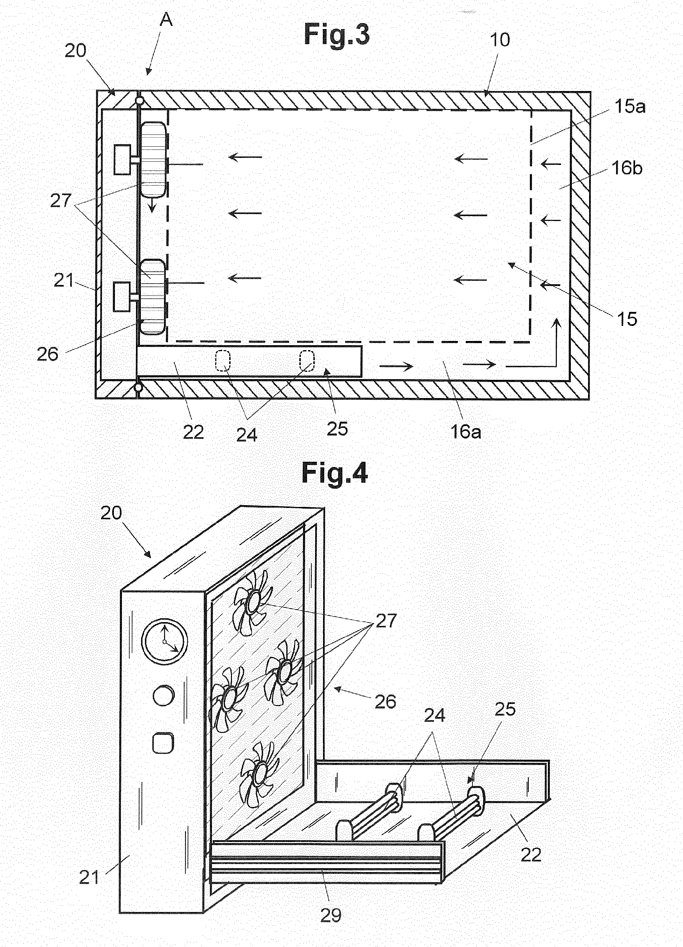

In particular, the first **10** portion and the second portion **20** are provided with guide means **29,** preferably of sliding type, arranged for allowing the second portion **20** of the food warmer **100** to selectively switch between a first configuration or a closed configuration A (fig. 3) wherein the first portion **10** and the second portion **20** are operatively connected one to another, and a second configuration or an open configuration B (fig. 1 and 2), wherein the first portion **10** and the second portion **20** are separated one from another to allow operations of maintenance, replacement of pieces or else replacement of one of the two portions **10, 20.**

The first portion **10** and the second portion **20** are then independent. In particular, all components necessary for the power supply and the operation of the heating assembly **25** and/ or the air-recirculating assembly **26,** are arranged on the second portion **20.** The first portion **10** accommodates only the treatment chamber **15** and an air passage channel **16,** as hereinafter described in detail.

Such a modular arrangement of the food warmer **100** with the removable connection between the first portion **10** and the second portion **20** allows a skilled technician to easily access the heating assembly **25** and/ or the air-recirculation assembly **26** for operations of maintenance or replacement of pieces, but also to get to the inside of the treatment chamber **15** for cleaning operations.

Furthermore, the modular arrangement allows the interchange of one of the two portions **10, 20** with a new one in case of malfunctions or needs, thereby keeping down the costs of spare parts.

In a preferred embodiment, as shown in figures 1 and 2, the first portion is a box-shaped body **10** defined by a plurality of walls **10a** and with the face or side wall **10b** open. The open side face **10b** defines a window that couples with the second portion **20** that is then representing the missing vertical wall closing the box-shape body **10** in the closed configuration **A.** Advantageously, the box-shaped body **10** is provided with a door **10c** for inserting dishes into the treatment chamber **15.** The door **10c** is preferably mounted on the wall by means of hinges.

Particularly, the second portion **20** comprises a vertical wall **21** combined with a base wall **22.** In a not-shown way, the two walls **21, 22** can be in turn disassembled. More in particular, the vertical wall **21** is orthogonal to the base wall **22** and, in a section as shown in figure **2****,** define a substantially L-shaped profile.

Operatively, the base wall **22** is "hidden" slidingly assembled inside the box-shaped body **10** by convenient side guides **29** representing the guide means, so that the vertical guide wall **21** can adhere to the open face **10b** of the box-shaped body **10.** In particular, the open face **10b** of the box-shaped body **10** defines a perimetrical edge **10d** on which a seal **10e** is arranged (figs. 2 and 3). The vertical wall **21** in the closed configuration A compresses the seal **10e** in order to realize an hermetic closure and impede the heat from losing from the treatment chamber **15.** In other words, the vertical wall **21** closes the open face **10b** of the box-shaped body **10** and the base wall **22** acts as a guiding or coupling wall with the box-shaped body **10.**

Concerning the structure, the treatment chamber **15** is obtained inside the box-shaped body **10** and is defined by a plurality of pierced walls **15a** or else with whatever openings, or again by means of grid-shaped walls allowing the passage and circulation of air inside the treatment chamber **15** itself. In particular, the treatment chamber **15** has a box shape too, similar to the box-shaped body **10,** but it has smaller size and then takes up only a part of the space inside the box-shaped body **10.** The remaining space defined by the same pierced walls **15a** and the same box-shaped body **10** represents a channel **16** for the air circulation. More in particular, the channel **16** surrounds at least in part the treatment chamber **15.**

As shown in figures 2 and 3, the channel **16** develops below the treatment chamber **15** and sideways thereof. The horizontal length **16a** represents the space in which the base wall **22** of the food warmer **100** is inserted, and in the closed configuration A it is partially occupied by the latter. On the contrary, the vertical length **16b** acts as a conveyor for supplying air into the treatment chamber **15.** Their combination defines a loop path for the air circulation, as reported in figure **3****.**

An additional aspect of the structure is the heating assembly **25** and the air-recirculating assembly **26.** The heating assembly **25** preferably comprises heating elements **24** arranged on the base wall **22,** whereas the air-recirculating assembly **26** comprises fans **27** housed in a housing space **21a** obtained on the vertical wall **21.** The fans **27** are used to have a forced hot-air recirculation passing through the loop path of the channel **16** and inside the treatment chamber **15.** In particular the fans **27,** as better shown in figure 4, are driven independently or in combination one with another and preferably arranged at quadrilateral vertices.

## Claims

1. Food warmer (100) comprising:
- a first portion (10) defining a treatment chamber (15) provided with a door (10c) in which a dish to be heated, or to be maintained at constant temperature, is introduced,
- a second portion (20), combined with the first portion (10), provided with an air-heating assembly (25) and/ or an air-recirculating assembly (26);
- wherein the first portion (10) comprises an open side (10b), different from said door (10c), and the second portion (20) is reversibly connectable to the first portion (10) to close said open side (10b), thereby isolating the treatment chamber (15) from the outer environment, and to operatively combine the air-heating assembly (25) and/ or the air-recirculating assembly (26) to the treatment chamber (15), and
- wherein the first portion (10) and the second portion (20) can be separated to allow operations of maintenance, replacement of pieces or else replacement of one of the two portions (10, 20) with a new portion,
**characterized by** providing guide means (29) arranged on the first (10) and the second (20) portion, respectively, allowing the selective switching between a closed configuration (A), wherein the first (10) and the second (20) portions are operatively connected one to another, and an open configuration (B) wherein the first (10) and the second (20) portion are separated one from another.

2. Food warmer (100) according to claim 1, wherein the first portion is a box-shaped body (10) defined by a plurality of side walls (10a) which contain said open side (10b), and wherein the second portion (20) comprises a vertical wall (21) combined with a base wall (22) substantially orthogonal to the vertical wall (21), wherein the base wall (22) can be inserted in the box-shaped body (10), at said open side (10b), like a "drawer" by virtue of the guide means (29), and the vertical wall (21) moves in abutment against the box-shaped body (10) taking the shape of a vertical wall which closes the food warmer (100) and isolates the treatment chamber (15) from the outside.

3. Food warmer (100) according to claim 2, wherein the open side (10b) of the box-shaped body (10) defines a perimetrical edge (10d) in which a seal (10e) is arranged; and a vertical wall (21) of the second portion (20) compresses the seal (10e) in the closed configuration (A) to realize a sealed coupling.

4. Food warmer (100) according to any one of claims 2-3, wherein the treatment chamber (15), obtained inside the box-shaped body (10), comprises a plurality of pierced or grid-shaped walls (15a) or else with whatever openings, which allow the air circulation.

5. Food warmer (100) according to any one of claims 2-4, wherein the treatment chamber (15) takes up only a part of the space inside the box-shaped body (10), in the remaining inner space an air circulation channel (16) is provided and defined by the same walls (15a) of the treatment chamber (15) and the walls (10a) of the box-shaped body (10).

6. Food warmer (100) according to claim 5, wherein the channel (16) surrounds at least in part the treatment chamber (15) and it extends both below (16a) the treatment chamber (15), in a volume of the box-shaped body where the base wall (22) of the second portion (20) of the food warmer is inserted, and sideways (16b) and/ or over the treatment chamber (15), so that to define a closed-loop path facilitating the air circulation inside the treatment chamber (15).

7. Food warmer (100) according to any one of claims 1-6, wherein the heating assembly (25) comprises one or more heating elements (24), preferably electrical resistances.

8. Food warmer (100) according to any one of claims 1-7, wherein the air-recirculating assembly (26) comprises one or more fans (27) whose function is to force the air flow into a passage channel (16) defined around the treatment chamber (15), to create a continuous air motion between the treatment chamber (15) and the electrical resistances (24).

9. Food warmer (100) according to claim 8 when the latter is in turn dependent from any one of claims 2-7, wherein the fans (27) are assembled on the vertical wall (21) of the second portion of the food warmer and the heating elements (24) are housed in the base wall (22) of the second portion (20) of the food warmer.
